# EUROPEAN PATENT SPECIFICATION

(11) **EP 2 127 514 B1**
(45) Date of publication and mention of the grant of the patent: **13.04.2011**
(21) Application number: 09160212.8
(22) Date of filing: 14.05.2009
(51) Int. Cl.: A01D 41/12, A01F 12/46

(54) **Unloading auger elbow assembly**
Ablade-Schneckenknieanordnung
Coude pour ensemble de déchargement

(30) Priority: 30.05.2008 US 57621 P
(43) Date of publication of application: 02.12.2009
(73) Proprietor: Deere & Company, Moline, IL 61265 (US)
(72) Inventor: Dulong, Renee A., Milan, IL 61264 (US)
(74) Representative: Holst, Sönke

(56) References cited:
- EP-A- 1 186 222
- WO-A-2008/002368
- US-A1- 2006 104 770

## Description

The invention relates to unloading auger elbow assemblies for agricultural harvesters.

Agricultural harvesters use internal mechanisms to thresh, separate, and clean grain. They then elevate and temporarily store the grain in a bin, and the bin is then unloaded using an unloading auger assembly.

The unloading auger assembly comprises a generally vertical auger assembly, a generally horizontal auger assembly, and an unloading auger elbow assembly. The vertical auger assembly lifts and transfers the grain from the bin to the auger elbow assembly. Then, the unloading auger elbow assembly transfers the grain to the horizontal auger assembly. Finally, the grain exits the horizontal auger assembly and is stored in a receptacle such as a grain cart.

The unloading auger elbow assembly comprises an auger elbow. Auger elbows comprise a plurality of parts and manufacturing steps. Traditionally, they are formed by welding together a first half and a second half, each half forming a semicircular tubular portion. This arrangement provides two long welds, one weld extending from the outlet to the inlet on the inside curve of the elbow, and one weld extending from the outlet to the inlet on the outside curve of the elbow. Once the two halves are welded together, a pivot joint mount and gussets are welded to the two halves and circular inlet flanges and outlet flanges are welded or bolted to the two halves. A pivot joint member is then fastened to the pivot joint mount.

Auger elbows can be difficult and expensive to manufacture. This is because their parts are challenging to align, and also because there are so many welds to place. When misalignment does occur, which it often does, it can increase the wear rate of the auger elbow assembly. For example, increased wear rates are often visible, on the parts that move relative to one another, along the grain inlet side of auger elbows. An additional problem with auger elbows is that they are relatively weak, in comparison to the high forces that are applied to them, and often fail. In particular, auger elbows are especially prone to failure along their welded joints.

An auger elbow assembly with the features of the preamble of claim 1 is known from EP-A-1 186 222.

It is an object of the present invention to provide an improved unloading auger elbow that does not or only in a reduced manner suffer from one or more of the mentioned disadvantages.

This object is achieved with the subject matter of claim 1, wherein the dependent claims recite advantageous embodiments of the invention.

In response to these problems, the applicant provides an unloading auger elbow assembly that comprises an auger elbow with a unitary tubular body, instead of the two half-elbows that are welded together to form the tubular body of the traditional auger elbow. A unitary cast body design is easier and less expensive to manufacture and provides improved alignment characteristics.

In addition, the auger elbow that the applicant provides has an annular machined surface, which is configured to support the unloading auger elbow assembly on the vertical auger assembly. The annular machined surface is machined concentric with a pivot axis. This arrangement further improves the alignment and rotation characteristics of the auger elbow and, ultimately, the entire unloading auger assembly.

Thus, an unloading auger elbow assembly for use on an agricultural harvester comprises an unloading auger elbow formed as a unitary cast body. The unloading auger elbow has a grain inlet configured to receive a flow of grain from a vertical auger assembly. Moreover, the unloading auger elbow has a grain outlet configured to transmit the flow of grain to a horizontal auger assembly.

The unitary cast body comprises a pivot joint mounting surface machined in the auger elbow. The unloading auger elbow assembly further comprises a pivot joint fastened to the pivot joint mounting surface. The pivot joint comprises a first pivot member and a second pivot member. The first pivot member is fastened to the pivot joint mounting surface, and the second pivot member is coupled to the first pivot member to pivot with respect thereto about a pivot axis.

The cast body further comprises an annular machined surface configured to support the unloading auger elbow assembly on the vertical auger assembly. The annular machined surface is machined concentric with the pivot axis. In addition, the annular machined surface is concentric with the pivot joint mounting surface.

An embodiment of the invention is shown in the drawings, in which:
FIG. 1 is a side elevational view of an agricultural harvester incorporating an unloading auger elbow assembly and an unloading auger assembly in its transport position.
FIG. 2 is an exploded view of an unloading auger elbow assembly.
FIG. 3 is a cross sectional view taken at section line 3-3 of the agricultural harvester in FIG. 1 of the unloading auger elbow assembly.

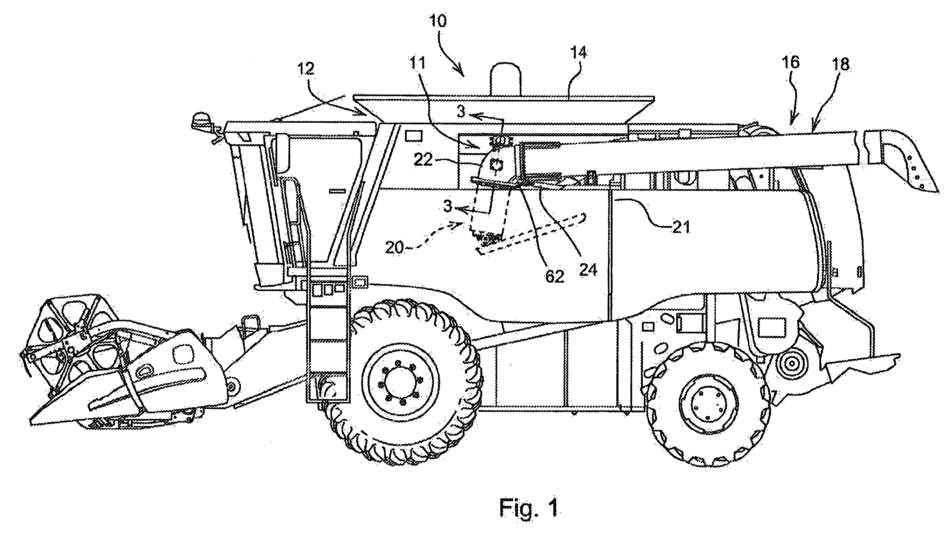

The agricultural harvester 10 in FIG. 1 has a grain holding bin 12 provided with downwardly converging, hopper-like extensions 14 that provide extra holding capacity for bin 12. Grain that has been threshed, separated and cleaned by internal mechanisms (not shown) of the harvester 10 is elevated and temporarily stored in bin 12 until unloaded either on-the-go or at a standstill into a receptacle (not shown). An unloading auger assembly 16 is utilized for this purpose and comprises a generally vertical auger assembly 20, a generally horizontal auger assembly 18, and an unloading auger elbow assembly 11. The unloading auger assembly 16 is shown in its transport position.

The unloading auger elbow assembly 11 comprises an unloading auger elbow 22. A hydraulic cylinder 24 is linked to a pivot arm connector 62. The hydraulic cylinder 24 is also linked to a chassis 21.

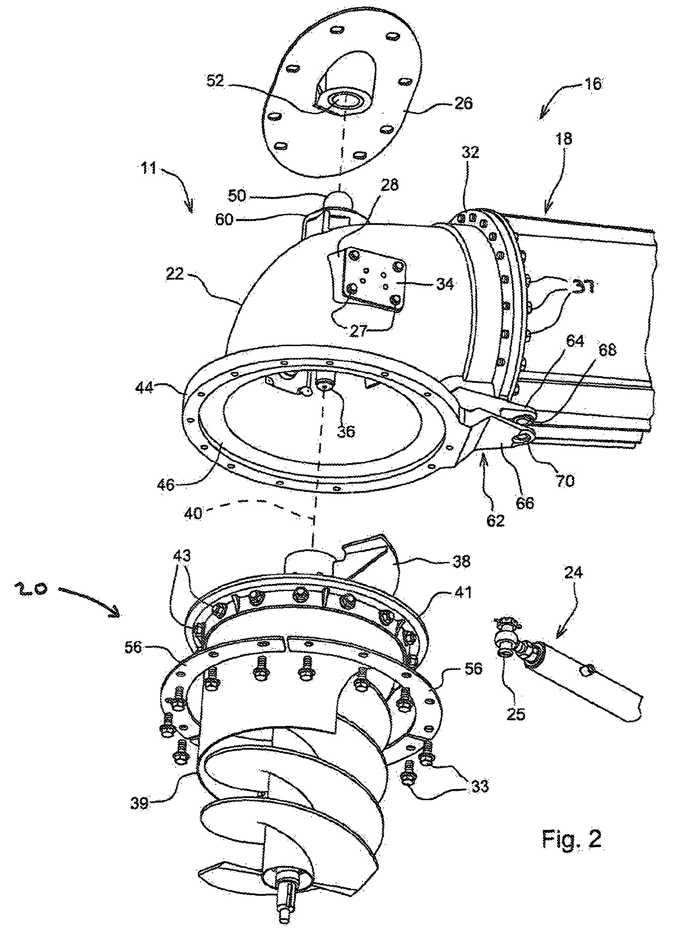

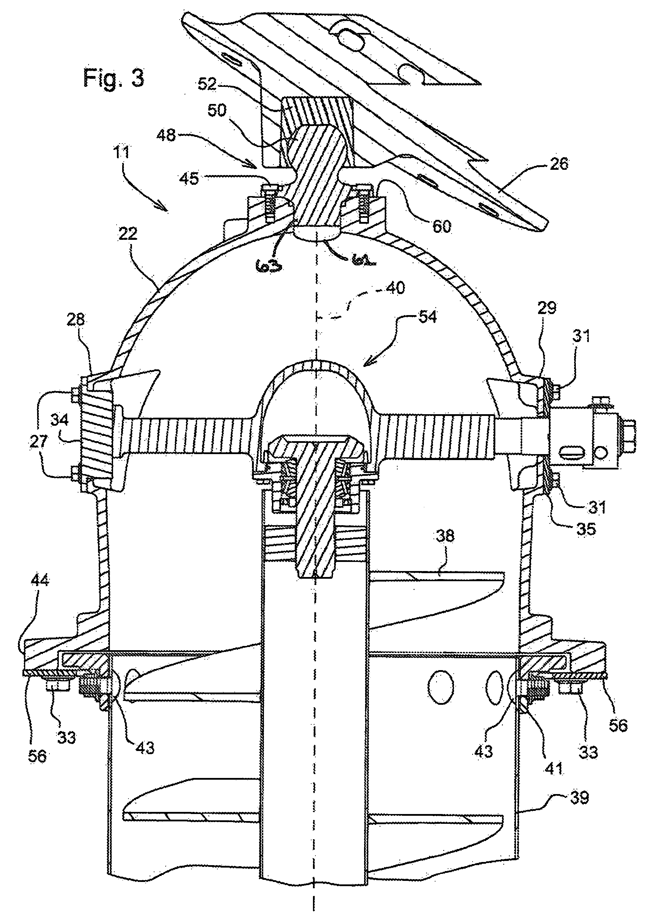

Referring now to FIG. 2 and FIG 3, the unloading auger assembly 16 is shown. The unloading auger elbow 22 is formed as a unitary cast body. The unloading auger elbow 22 is usually formed at an angle of generally 90°, and preferably between 70° and 90°. The auger elbow has a grain inlet 44, configured to receive a flow of grain from the vertical auger assembly 20, and a grain outlet 32, configured to transmit the flow of grain to a horizontal auger assembly 18. The grain inlet 44 and the grain outlet 32 may be circular in shape.

The auger elbow 22 further comprises an annular machined surface 46 disposed at the grain inlet 44 and extending in a circle about the grain inlet 44 of the auger elbow 22. The annular machine surface 46 is configured to support and align the unloading auger elbow assembly 11 on the vertical auger assembly 20. The annular machined surface 46 is machined concentric with a pivot axis 40.

The auger elbow 22 further comprises a pivot joint mounting surface 60 machined in the auger elbow 22. A pivot joint 48 is fastened to the pivot joint mounting surface 60. The pivot joint mounting surface 60 includes a flat upper surface generally perpendicular to pivot axis 40 and cylindrical hole 61 that is concentric with the annular machined surface 46 and the pivot axis 40. Cylindrical hole 61 is configured to receive a cylindrical portion 63 of a first pivot member 50.

The pivot joint 48 comprises the first pivot member 50 and a second pivot member 52. The first pivot member 50 is fastened to the pivot joint mounting surface 60 with first pivot member fasteners 45. The second pivot member 52 is coupled to the first pivot member 50 to pivot with respect thereto about the pivot axis 40.

Exemplarily, the first pivot member 50 is a ball. The first pivot member 50 may, for example, be made out of steel. Exemplarily, the second pivot member 52 is a socket. The second pivot member 52 may, for example, be made out of plastic or a soft metal.

The second pivot joint member 52 is fastened to a pivot joint bracket 26, and the pivot joint bracket 26 is fastened to the chassis (see FIG. 1).

The auger elbow 22 further comprises a pivot arm connector 62 formed integral with the auger elbow 22. Exemplarily, the pivot arm connector 62 comprises a top portion 64 with a top hole 68 and a bottom portion 66 with a bottom hole 70. The top and bottom holes 68, 70 are concentric with one another.

The unloading auger elbow assembly 11 further comprises a hydraulic cylinder 24 that is connected to the pivot arm connector 62 with a first hydraulic cylinder pin 25. The hydraulic cylinder 24 is also attached to the chassis (see FIG. 1) with a second hydraulic cylinder pin (not shown). The hydraulic cylinder 24 pivots the unloading auger assembly 16 about the axis 40 between a transport position and an unloading position. In the transport position, the horizontal auger assembly 18 is generally parallel to the chassis (see FIG. 1). In the unloading position, the horizontal auger assembly 18 forms an angle of up to 90° or more with the chassis (see FIG. 1).

A vertical auger assembly 20 comprises a vertical auger 36 that is disposed within and is driven in rotation with respect to a stationary vertical auger tube 39. This rotary motion lifts grain from the grain holding bin 12 to the grain inlet 44 of the auger elbow assembly 11. A vertical auger tube flange 41 is fixed to the upper end of the vertical auger tube 39 and is disposed to support the unloading auger elbow assembly for rotation about axis 40. Vertical auger tube flange 41 mates with the annular machined surface 46. Furthermore, the vertical auger tube flange 41 is fastened to the vertical auger tube 39 with a plurality of vertical auger tube fasteners 43. The vertical auger tube flange 41 is retained against the annular machined surface 46 with a plurality of retainers 56. The retainers 56 are retained against the annular machined surface 46 with a plurality of grain inlet fasteners 33. A generally vertical auger 38 mates with a shaft 36. The vertical auger 38 transmits power to the shaft 36 with, for example, a plurality of splines or a key.

The auger elbow 22 further comprises first and second mating surfaces 28, 29 that are formed in the auger elbow 22. A first mounting bracket 34 is retained against the first mating surface 28 with a plurality of first mounting bracket fasteners 27. Furthermore, a second mounting bracket 35 is retained against the second mounting surface 29 with a plurality of second mounting bracket fasteners 31.

The first and second mount brackets 34, 35 secure a gear box assembly 54 in the inside of the auger elbow 22. The gear box assembly 54 transmits power from a generally vertical auger 38 to a generally horizontal auger (not shown). Additionally, the vertical auger 38 transmits the grain vertically to the grain inlet 44 of the unloading auger elbow 22. The grain outlet 32 then transmits the grain to the horizontal auger (not shown) for discharge into the receptacle (not shown).

## Claims

1. An unloading auger elbow assembly (11) for use on an agricultural harvester (10), comprising:
an unloading auger elbow (22) having a grain inlet (44) configured to receive a flow of grain from a vertical auger assembly (20) and a grain outlet (32) configured to transmit the flow of grain to a horizontal auger assembly (18), and
a pivot joint (48) fastened to a pivot joint mounting surface (60) of the auger elbow (22),
**characterized in that** the unloading auger elbow (22) is formed as a unitary cast body that comprises the pivot joint mounting surface (60) which is machined in the auger elbow (22).

2. The unloading auger elbow assembly (11) for use on an agricultural harvester (10) of claim 1, wherein the pivot joint (48) comprises a first pivot member (50) and a second pivot member (52), and further wherein the first pivot member (50) is fastened to the pivot joint mounting surface (60), and the second pivot member (52) is coupled to the first pivot member (50) to pivot with respect thereto about a pivot axis (40).

3. The unloading auger elbow assembly (11) for use on an agricultural harvester (10) of claim 2, wherein one of the first and second pivot members (50, 52) is a ball, and the other of the first and second pivot members is a socket.

4. The unloading auger elbow assembly (11) for use on an agricultural harvester (10) of claim 3, wherein the ball is made of steel, and the socket is made of plastic.

5. The unloading auger elbow assembly (11) for use on an agricultural harvester (10) of claim 1, wherein the cast body further comprises a pivot arm connector (62) formed in the auger elbow (22).

6. The unloading auger elbow assembly (11) for use on an agricultural harvester (10) of claim 5, wherein the unloading auger elbow assembly (11) further comprises a hydraulic cylinder (24) that is attached to a pivot arm connector (62) and the chassis of the agricultural harvester (10).

7. The unloading auger elbow assembly (11) for use on an agricultural harvester (10) of claim 1, wherein the cast body further comprises first and second mating surfaces (28, 29) that are formed in the auger elbow (22).

8. The unloading auger elbow assembly (11) for use on an agricultural harvester (10) of claim 2, wherein the cast body further comprises an annular machined surface (46) configured to support the unloading auger elbow assembly (11) on the vertical auger assembly (20), and the annular machined surface (46) is machined concentric with the pivot axis (40).

9. The unloading auger elbow assembly (11) for use on an agricultural harvester (10) of claim 8, wherein the annular machined surface (46) is concentric with the pivot joint mounting surface (60).

10. The unloading auger elbow assembly (11) for use on an agricultural harvester (10) of claim 4, wherein the cast body further comprises a pivot arm connector (62) formed in the auger elbow (22), and first and second mating surfaces (28, 29) formed in the auger elbow (22).

11. An agricultural harvester (10) comprising an unloading auger elbow assembly (11) according to one of the preceding claims.

## Patentansprüche

1. Abladeschneckenknieanordnung (11) für die Verwendung an einem landwirtschaftlichen Erntefahrzeug (10) umfassend
ein Abladeschneckenknie (22) mit einem Korneinlass (44), der zur Aufnahme eines Kornstroms von einer vertikalen Schneckenanordnung (20) konfiguriert ist, und einem Kornauslass (32), der zur Übertragung des Kornstroms zu einer horizontalen Schneckenanordnung (18) konfiguriert ist, und
eine Schwenkverbindung (48), die an einer Schwenkverbindungsmontagefläche (60) des Schneckenknies (22) befestigt ist,
**dadurch gekennzeichnet, dass** das Abladeschneckenknie (22) als ein einstückiger Gusskörper ausgebildet ist, der die Schwenkverbindungsmontagefläche (60) umfasst, die im Schneckenknie (22) maschinell eingearbeitet ist.

2. Abladeschneckenknieanordnung (11) für die Verwendung an einem landwirtschaftlichen Erntefahrzeug (10) nach Anspruch 1, wobei die Schwenkverbindung (48) ein erstes Schwenkglied (50) und ein zweites Schwenkglied (52) umfasst und ferner wobei das erste Schwenkglied (50) an der Schwenkverbindungsmontagefläche (60) befestigt ist und das zweite Schwenkglied (52) an das erste Schwenkglied (50) gekoppelt ist, um diesbezüglich um eine Schwenkachse (40) zu schwenken.

3. Abladeschneckenknieanordnung (11) für die Verwendung an einem landwirtschaftlichen Erntefahrzeug (10) nach Anspruch 2, wobei das erste oder das zweite Schwenkglied (50, 52) eine Kugel ist und das jeweils andere eine Pfanne ist.

4. Abladeschneckenknieanordnung (11) für die Verwendung an einem landwirtschaftlichen Erntefahrzeug (10) nach Anspruch 3, wobei die Kugel aus Stahl hergestellt ist und die Pfanne aus Kunststoff hergestellt ist.

5. Abladeschneckenknieanordnung (11) für die Verwendung an einem landwirtschaftlichen Erntefahrzeug (10) nach Anspruch 1, wobei der Gusskörper ferner einen Schwenkarmverbinder (62) umfasst, der im Schneckenknie (22) ausgebildet ist.

6. Abladeschneckenknieanordnung (11) für die Verwendung an einem landwirtschaftlichen Erntefahrzeug (10) nach Anspruch 5, wobei die Abladeschneckenknieanordnung (11) ferner einen Hydraulikzylinder (24) umfasst, der an einem Schwenkarmverbinder (62) und am Chassis des landwirtschaftlichen Erntefahrzeugs (10) angebracht ist.

7. Abladeschneckenknieanordnung (11) für die Verwendung an einem landwirtschaftlichen Erntefahrzeug (10) nach Anspruch 1, wobei der Gusskörper ferner eine erste und eine zweite Passfläche (28, 29) umfasst, die im Schneckenknie (22) ausgebildet sind.

8. Abladeschneckenknieanordnung (11) für die Verwendung an einem landwirtschaftlichen Erntefahrzeug (10) nach Anspruch 2, wobei der Gusskörper ferner eine ringförmige maschinell bearbeitete Oberfläche (46) umfasst, die zum Stützen der Abladeschneckenknieanordnung (11) an der vertikalen Schneckenanordnung (20) konfiguriert ist, und die ringförmige maschinell bearbeitete Oberfläche (46) maschinell bearbeitet ist, so dass sie mit der Schwenkachse (40) konzentrisch ist.

9. Abladeschneckenknieanordnung (11) für die Verwendung an einem landwirtschaftlichen Erntefahrzeug (10) nach Anspruch 8, wobei die ringförmige maschinell bearbeitete Oberfläche (46) konzentrisch mit der Schwenkverbindungsmontagefläche (60) ist.

10. Abladeschneckenknieanordnung (11) für die Verwendung an einem landwirtschaftlichen Erntefahrzeug (10) nach Anspruch 4, wobei der Gusskörper ferner einen Schwenkarmverbinder (62), der im Schneckenknie (22) ausgebildet ist, und eine erste und eine zweite Passfläche (28, 29), die im Schneckenknie (22) ausgebildet sind, umfasst.

11. Landwirtschaftliches Erntefahrzeug (10) umfassend eine Abladeschneckenknieanordnung (11) nach einem der vorhergehenden Ansprüche.

## Revendications

1. Ensemble de coude pour vis de déchargement (11) destiné à l'utilisation sur une moissonneuse agricole (10), comprenant :
un coude pour vis de déchargement (22) ayant une entrée de grain (44) configurée de manière à recevoir un flux de grain provenant d'un ensemble de vis vertical (20) et une sortie de grain (32) configurée de manière à transmettre le flux de grain à un ensemble de vis horizontal (18), et
une articulation à pivot (48) attachée à une surface de montage d'articulation à pivot (60) du coude pour vis (22),
**caractérisé en ce que** le coude pour vis de déchargement (22) est formé en tant que corps coulé unitaire qui comprend la surface de montage d'articulation à pivot (60) qui est usinée dans le coude pour vis (22).

2. Ensemble de coude pour vis de déchargement (11) destiné à l'utilisation sur une moissonneuse agricole (10) selon la revendication 1, dans lequel l'articulation à pivot (48) comprend un premier organe de pivot (50) et un deuxième organe de pivot (52), et dans lequel en outre le premier organe de pivot (50) est attaché à la surface de montage d'articulation à pivot (60), et le deuxième organe de pivot (52) est accouplé au premier organe de pivot (50) de manière à pivoter par rapport à celui-ci autour d'un axe de pivotement (40) .

3. Ensemble de coude pour vis de déchargement (11) destiné à l'utilisation sur une moissonneuse agricole (10) selon la revendication 2, dans lequel l'un des premier et deuxième organes de pivot (50, 52) est une boule et l'autre des premier et deuxième organes de pivot est une douille sphérique.

4. Ensemble de coude pour vis de déchargement (11) destiné à l'utilisation sur une moissonneuse agricole (10) selon la revendication 3, dans lequel la boule est en acier et la douille sphérique est en plastique.

5. Ensemble de coude pour vis de déchargement (11) destiné à l'utilisation sur une moissonneuse agricole (10) selon la revendication 1, dans lequel le corps coulé comprend en outre un connecteur de bras pivotant (62) formé dans le coude pour vis (22).

6. Ensemble de coude pour vis de déchargement (11) destiné à l'utilisation sur une moissonneuse agricole (10) selon la revendication 5, dans lequel l'ensemble de coude pour vis de déchargement (11) comprend en outre un cylindre hydraulique (24) qui est attaché à un connecteur de bras pivotant (62) et au châssis de la moissonneuse agricole (10).

7. Ensemble de coude pour vis de déchargement (11) destiné à l'utilisation sur une moissonneuse agricole (10) selon la revendication 1, dans lequel le corps coulé comprend en outre des première et deuxième surfaces d'accouplement (28, 29) qui sont formées dans le coude pour vis (22).

8. Ensemble de coude pour vis de déchargement (11) destiné à l'utilisation sur une moissonneuse agricole (10) selon la revendication 2, dans lequel le corps coulé comprend en outre une surface annulaire usinée (46) configurée pour supporter l'ensemble de coude pour vis de déchargement (11) sur l'ensemble de vis vertical (20), et la surface annulaire usinée (46) est usinée de manière concentrique à l'axe de pivotement (40) .

9. Ensemble de coude pour vis de déchargement (11) destiné à l'utilisation sur une moissonneuse agricole (10) selon la revendication 8, dans lequel la surface annulaire usinée (46) est concentrique à la surface de montage de l'articulation à pivot (60).

10. Ensemble de coude pour vis de déchargement (11) destiné à l'utilisation sur une moissonneuse agricole (10) selon la revendication 4, dans lequel le corps coulé comprend en outre un connecteur de bras pivotant (62) formé dans le coude pour vis (22), et des première et deuxième surfaces d'accouplement (28, 29) formées dans le coude pour vis (22).

11. Moissonneuse agricole (10) comprenant un ensemble de coude pour vis de déchargement (11) selon l'une quelconque des revendications précédentes.
